# EUROPÄISCHE PATENTANMELDUNG

(11) **EP 1 096 155 A2**
(43) Veröffentlichungstag der Anmeldung: **02.05.2001**
(21) Anmeldenummer: 00123214.9
(22) Anmeldetag: 26.10.2000
(51) Int. Cl.: F16B 1/02

(54) **Befestigungsanordnung zur lösbaren Verbindung von Bauteilen**

(30) Priorität: 28.10.1999 DE 29918962 U
(71) Anmelder: Minner, Heinz-Josef, 59846 Sundern (DE)
(72) Erfinder: Minner, Heinz-Josef, 59846 Sundern (DE)
(74) Vertreter: Köchling, Conrad, Dipl.-Ing.

(57) **Zusammenfassung**

Um eine Befestigungsanordnung zur lösbaren Verbindung von Bauteilen, bestehend aus einer im wesentlichen ebenen Platte, einem an die Platte anschließbaren Teil, sowie Verbindungsmitteln zur Fixierung des Teils an der Platte, zu schaffen, die kostengünstig zu fertigen ist und eine einfache Installation möglichst ohne Werkzeug ermöglicht, wird vorgeschlagen, daß die Platte (1) Ausschnitte aufweist, in die vorzugsweise T-förmige Verriegelungsvorsprünge (3) des Teils (2) einsteckbar sind, so daß ein Teil des Schaftes der Verriegelungsvorsprünge (3) sowie quer von diesem abragende Ansätze über die dem Teil (2) abgewandte Seite der Platte (1) vorragen, und daß insbesondere U-förmige Riegel (4) parallel zur Platte (1) verschieblich angeordnet sind, die in den Spalt zwischen den Ansätzen der Verriegelungsvorsprünge (4) und der Platte (1) eingreifen sowie den Schaft umgreifen.

## Beschreibung

Die Erfindung betrifft eine Befestigungsanordnung zur lösbaren Verbindung von Bauteilen, bestehend aus einer im wesentlichen ebenen Platte, einem an die Platte anschließbaren Teil, sowie Verbindungsmitteln zur Fixierung des Teils an der Platte.

Im Stand der Technik ist es bekannt, Bauteile, die beispielsweise aus einer Metallplatte und daran befestigbaren Teilen bestehen, mittels Schrauben oder dergleichen aneinander zu befestigen. Eine solche Anordnung ist montageintensiv und insbesondere für den Benutzer solcher Befestigungsanordnungen schwierig zu handhaben, wenn beispielsweise Teile ausgewechselt werden sollen oder eine teilweise oder vollständige Demontage oder Montage erfolgen soll.

Ausgehend von diesem Stand der Technik liegt der Erfindung die Aufgabe zugrunde, eine Befestigungsanordnung zu schaffen, die kostengünstig zu fertigen ist und eine einfache Installation möglichst ohne Werkzeug ermöglicht.

Zur Lösung dieser Aufgabe wird vorgeschlagen, daß die Platte Ausschnitte aufweist, in die vorzugsweise T-förmige Verriegelungsvorsprünge des Teils einsteckbar sind, so daß ein Teil des Schaftes der Verriegelungsvorsprünge sowie quer von diesem abragende Ansätze über die dem Teil abgewandte Seite der Platte vorragen, und daß insbesondere U-förmige Riegel parallel zur Platte verschieblich angeordnet sind, die in den Spalt zwischen den Ansätzen der Verriegelungsvorsprünge und der Platte eingreifen sowie den Schaft umgreifen.

Gemäß der Erfindung weist das an die Platte anschließbare Teil Verriegelungsvorsprünge auf, die im wesentlichen T-förmig ausgebildet sind. Die Platte weist entsprechende schlitzartige Ausschnitte auf, in welche die Verriegelungsvorsprünge einsteckbar sind, so daß das anschließbare Teil quasi vor der Platte angeordnet ist und die Verriegelungsvorsprünge hinterseitig der Platte von dieser abragen. Zur Verbindung der Teile miteinander sind vorzugsweise U-förmige Riegel vorgesehen, die nach dem Zusammenstecken der anschließbaren Teile und der Platte an die Rückseite der Platte angelegt werden können und in den Spalt zwischen den Ansätzen der Verriegelungsvorsprünge und der Platte eingreifen und dabei den Schaft umgreifen, so daß die Teile lagegesichert miteinander verbunden sind. Die Verbindung kann in einfacher Weise ohne Werkzeug vorgenommen werden. In gleicher Weise ist es selbstverständlich auch möglich, die Teile durch Entfernung der Riegel aus der Verriegelungslage zu demontieren.

Bevorzugt ist vorgesehen, daß die Platte ein Blechteil ist.

Desweiteren ist bevorzugt vorgesehen, daß das an die Platte anschließbare Teil ein Blechzuschnitt ist, an dessen Kanten die Verriegelungsvorsprünge angeschnitten sind.

Das an die Platte anschließbare Teil kann aus einem beliebig geformten Blechzuschnitt bestehen, wobei an zueinander parallele Kanten des Blechzuschnittes die Verriegelungsvorsprünge angeschnitten sind.

Dabei ist bevorzugt vorgesehen, daß an die Platte anschließbare Teil mindestens einen Bereich aufweist, der orthogonal an die Platte anschließt, wobei die Verriegelungsvorsprünge an diesen orthogonal zur Platte gerichteten Bereich anschließen.

Solche Teile sind einfach als Stanzbiegeteile zu fertigen.

Bevorzugt ist zudem vorgesehen, daß die Platte als Träger von Installationsteilen, insbesondere elektrischen Installationsteilen, ausgebildet ist und das anschließbare Teil die Installationsteile abdeckt.

Besonders bevorzugt ist vorgesehen, daß das anschließbare Teil ein Abdeckglas umgibt, welches in der Montagesollage zwischen dem Teil und der Platte gehalten ist

Insbesondere ist bevorzugt vorgesehen, daß die Platte in dem vom anschließbaren Teil abgedeckten Bereich einen großflächigen Ausschnitt aufweist, das anschließbare Teil einen hohlen Glaskörper aus vorzugsweise opakem Material umgibt, der einen Hals aufweist, welcher den Ausschnitt durchgreift, wobei die so gebildete Montageeinheit an einem ortsfest befestigten Installationsteil befestigbar ist, indem der Hals mit dem Installationsteil steckverbindbar oder gewindemäßig verbindbar ist, wobei vornehmlich das Installationsteil ein Lampenträger ist, dessen Lampe von dem Glaskörper umgeben und zu einer Leuchte ergänzt ist.

Die erfindungsgemäße Anordnung ermöglicht es, beispielsweise sogenannte Nurglasleuchten mit schmückenden Elementen zu versehen, indem auf den Glaskörper das entsprechende beliebig geformte und mit Ornamenten versehene anschließbare Teil aufgesetzt wird und die Platte mit ihrem Ausschnitt derart auf den Hals des Glaskörpers aufgesetzt wird, daß die mit den Verriegelungsvorsprüngen versehenen Randkanten des anschließbaren Teiles durch die Schlitze der Platte gesteckt werden und mit den Riegeln verriegelt werden können. Somit bildet die Platte mit dem anschließbaren Teil und dem Glaskörper eine komplette Montageeinheit, die in einfacher Weise mit dem entsprechenden ortsfesten Installationsteil verbindbar ist, welches die elektrischen Anschlüsse und den Lampenträger mit der elektrischen Lampe aufweist. Das Installationsteil kann beispielsweise einen Gewindehals aufweisen, in den der mit Gewinde versehene Hals des Glasteiles eingeschraubt werden kann. Es ist auch üblich, daß solche Nurglasleuchten einen Hals aufweisen, der mit dem entsprechenden Installationsteil über federnde Rasten oder dergleichen verbindbar ist.

Sofern bei einer solchen Ausbildung das Leuchtmittel, also die Lampe, ersetzt werden muß, so ist es nicht erforderlich, die Schmuckelemente (die Platte und das daran angeschlossene Teil) zu entfernen, sondern der Glaskörper kann samt Platte und daran fixierten anschließbaren Teil von dem Installationsteil abgenommen werden, so daß die entsprechende Glühlampe ersetzbar ist und anschließend das komplette Teil wieder mit dem Installationsteil verbunden werden kann.

Eine besonders bevorzugte Ausbildung wird darin gesehen, daß der U-förmige Riegel ein Kunststoff-Formteil ist.

Dabei ist besonders bevorzugt, daß der U-förmige Riegel ein flaches Formteil ist, dessen Basis und Schenkel im Querschnitt rechteckige Form aufweisen, wobei die Breite erheblich größer als die Höhe der Rechteckform ist, vorzugsweise um das Dreifache.

Insbesondere ist bevorzugt, daß der Riegel Keilflächen aufweist.

Eine besonders vorteilhafte Ausbildung wird darin gesehen, daß der als flaches Formteil ausgebildete Riegel an den Innenrandkanten der Schenkel orthogonal abragende Stege aufweist, die vom freien Ende der Schenkel zur Basis hin keilförmig ansteigen und insbesondere in der Basis benachbarten Endbereich in eine parallel zur Schenkelfläche verlaufende Form übergehen.

Dabei ist zudem vorgesehen, daß die Breite der Stege etwa gleich der Dicke der Schenkel beziehungsweise Basis ist.

Ein Ausführungsbeispiel der Erfindung ist in der Zeichnung dargestellt und im folgenden näher beschrieben. Es zeigt:

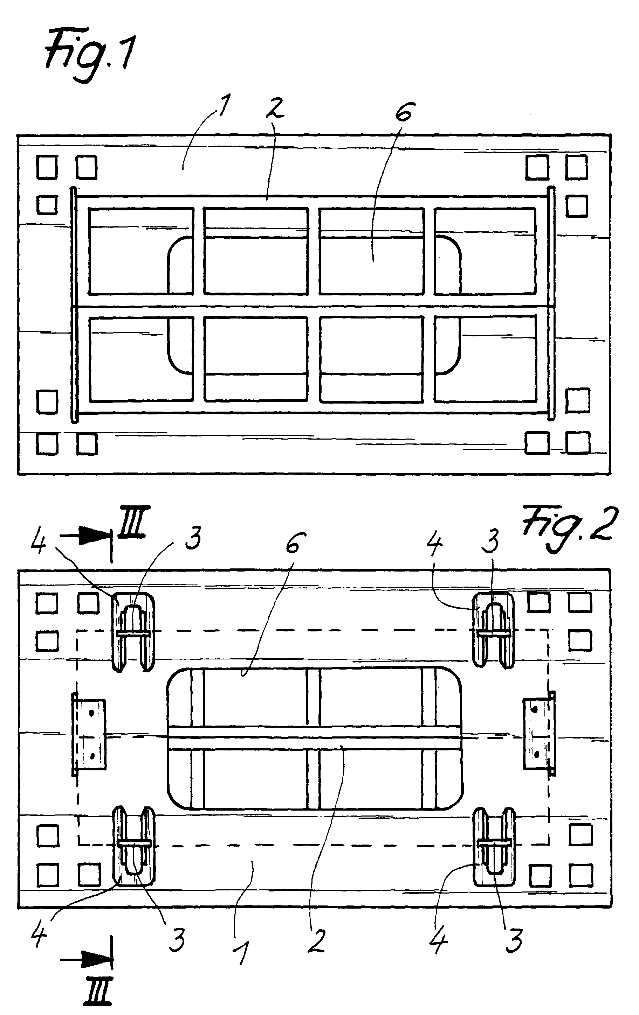

- Figur 1: eine Befestigungsanordnung in Draufsicht;

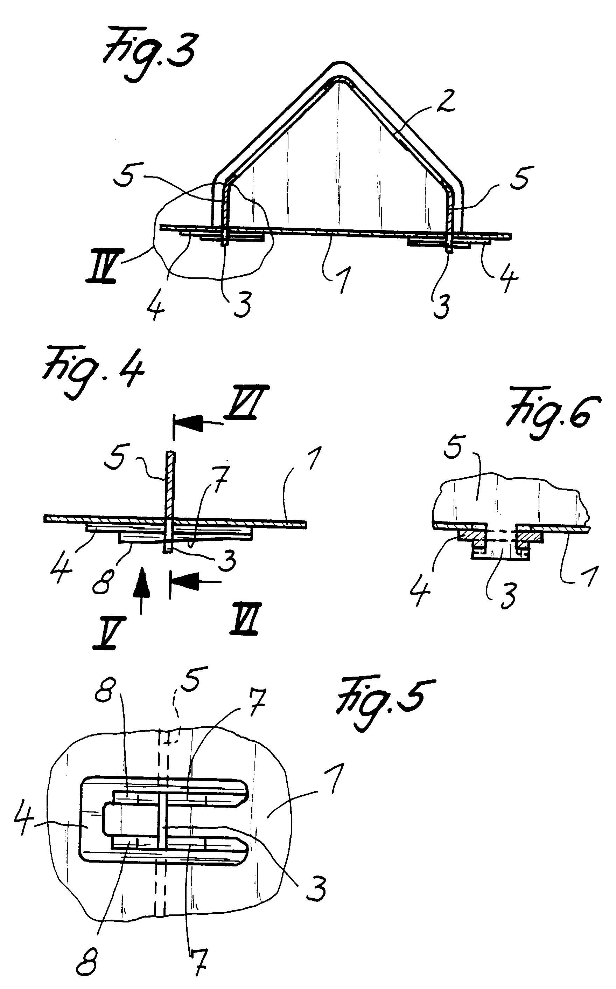

- Figur 2: desgleichen in Rückansicht;
- Figur 3: desgleichen im Schnitt III/III der Figur 2 gesehen;
- Figur 4: eine Einzelheit gemäß IV/IV in Figur 3 gesehen;
- Figur 5: die Einzelheit in Blickrichtung des Pfeiles V der Figur 4 gesehen;
- Figur 6: die Einzelheit im Schnitt VI/VI der Figur 4 gesehen.

In der Zeichnung ist eine Befestigungsanordnung zur lösbaren Verbindung von Bauteilen gezeigt. Sie besteht aus einer im wesentlichen ebenen Platte 1 und einem an die Platte anschließbaren Teil. Die Platte 1 weist schlitzförmige Ausschnitte auf, in die T-förmige Verriegelungsvorsprünge 3 des Teils 2 einsteckbar sind, so daß ein Teil des Schaftes der Verriegelungsvorsprünge 3 sowie die quer von diesen abragenden Ansätze über die dem Teil 2 abgewandte Seite der Platte 1 vorragen, wie insbesondere anhand von Figur 6 verdeutlicht ist. Zur Fixierung der Teile aneinander sind U-förmige Riegel 4 vorgesehen, die parallel zur Rückseite der Platte 1 verschieblich angeordnet sind und die in den Spalt zwischen den Ansätzen der Verriegelungsvorsprünge 3 und der Platte 1 eingreifen sowie den Schaft in diesem Bereich umgreifen.

Im Ausführungsbeispiel ist die Platte 1 ein ebenes Blechteil, welches aber auch beispielsweise an seinen Randkanten abgekantet oder abgebogen sein kann. Das an die Platte 1 anschließbare Teil 2 ist ein Blechzuschnitt, der im Querschnitt nach Art eines Hausgiebels ausgebildet ist, wobei zwei parallele Randkanten orthogonal zur Platte 1 abragen. An diesen Kanten sind die Verriegelungsvorsprünge 3 angeschnitten. Das an die Platte 1 anschließbare Teil 2 weist somit Bereiche 5 auf, die orthogonal an die Platte 1 anschließen, wobei die Verriegelungsvorsprünge 3 an diesen orthogonal zur Platte 1 gerichteten Bereich anschließen. Vorzugsweise ist die Anordnung so vorgesehen, daß das anschließbare Teil 2 ein Abdeckglas umgibt, welches in der Montagesollage zwischen dem Teil 2 und der Platte 1 gehalten ist. Die Platte 1 weist in dem von dem anschließbaren Teil 2 abgedeckten Bereich einen großflächigen Ausschnitt 6 auf, wobei das anschließbare Teil 2 einen hohlen Glaskörper aus opakem Material umgeben kann, der einen Hals aufweist, welcher den Ausschnitt 6 durchgreift. Die so gebildete Montageeinheit kann beispielsweise an einen ortsfest befestigten Installationsteil fixiert werden, indem der Hals mit dem Installationsteil steckverbindbar ist oder gewindemäßig verbindbar ist.

Dabei ist das Installationsteil beispielsweise ein Lampenträger, dessen Lampe von dem Glaskörper umgeben ist und zu einer Leuchte ergänzt ist.

Die U-förmigen Riegel 4 sind vorzugsweise Kunststoffformteile. Die Basis und die Schenkel des Riegels 4 weisen im Querschnitt rechteckige Form auf, wobei die Breite erheblich größer als die Höhe der Rechteckform ist, vorzugsweise um das Dreifache. Beispielsweise kann die Höhe 2 mm und die Breite 6 mm betragen. Zusätzlich weisen die Riegel Keilflächen 7 auf, wie insbesondere in Figur 4 und 5 verdeutlicht ist. Der als flaches Formteil ausgebildete Riegel 4 weist dabei an den Innenrandkanten seiner Schenkel orthogonal abragende Stege auf, die vom freien Ende der Schenkel zur Basis hin keilförmig ansteigen (im Bereich 7) und im der Basis benachbarten Endbereich (bei 8) in eine parallel zur Schenkelfläche beziehungsweise zur Platte 1 verlaufende Form übergehen. Die Breite der Stege (Teile 7,8) gleicht etwa der Dicke der Schenkel beziehungsweise der Basis des Riegels 4.

Die Erfindung stellt eine äußerst einfach zu habende Befestigungsanordnung zur Verfügung, die ohne Werkzeug gehandhabt werden kann und äußerst funktionssicher ist.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Befestigungsanordnung zur lösbaren Verbindung von Bauteilen, bestehend aus einer im wesentlichen ebenen Platte (1), einem an die Platte anschließbaren Teil (2), sowie Verbindungsmitteln zur Fixierung des Teils (2) an der Platte (1),
**dadurch gekennzeichnet,** daß die Platte (1) Ausschnitte aufweist, in die vorzugsweise T-förmige Verriegelungsvorsprünge (3) des Teils (2) einsteckbar sind, so daß ein Teil des Schaftes der Verriegelungsvorsprünge (3) sowie quer von diesem abragende Ansätze über die dem Teil (2) abgewandte Seite der Platte (1) vorragen, und daß insbesondere U-förmige Riegel (4) parallel zur Platte (1) verschieblich angeordnet sind, die in den Spalt zwischen den Ansätzen der Verriegelungsvorsprünge (4) und der Platte (1) eingreifen sowie den Schaft umgreifen.

2. Befestigungsanordnung nach Anspruch 1,
**dadurch gekennzeichnet,** daß die Platte (1) ein Blechteil ist.

3. Befestigungsanordnung nach Anspruch 1 oder 2,
**dadurch gekennzeichnet,** daß das an die Platte (1) anschließbare Teil (2) ein Blechzuschnitt ist, an dessen Kanten die Verriegelungsvorsprünge (3) angeschnitten sind.

4. Befestigungsanordnung nach einem der Ansprüche 1 bis 3,
**dadurch gekennzeichnet,** daß an die Platte (1) anschließbare Teil (2) mindestens einen Bereich (5) aufweist, der orthogonal an die Platte (1) anschließt, wobei die Verriegelungsvorsprünge (3) an diesen orthogonal zur Platte (1) gerichteten Bereich (5) anschließen.

5. Befestigungsanordnung nach einem der Ansprüche 1 bis 4,
**dadurch gekennzeichnet,** daß die Platte (1) als Träger von Installationsteilen, insbesondere elektrischen Installationsteilen, ausgebildet ist und das anschließbare Teil (2) die Installationsteile abdeckt.

6. Befestigungsanordnung nach einem der Ansprüche 1 bis 5,
**dadurch gekennzeichnet,** daß das anschließbare Teil (2) ein Abdeckglas umgibt, welches in der Montagesollage zwischen dem Teil (2) und der Platte (1) gehalten ist

7. Befestigungsanordnung nach einem der Ansprüche 1 bis 6,
**dadurch gekennzeichnet,** daß die Platte (1) in dem vom anschließbaren Teil (2) abgedeckten Bereich einen großflächigen Ausschnitt (6) aufweist, das anschließbare Teil (2) einen hohlen Glaskörper aus vorzugsweise opakem Material umgibt, der einen Hals aufweist, welcher den Ausschnitt (6) durchgreift, wobei die so gebildete Montageeinheit an einem ortsfest befestigten Installationsteil befestigbar ist, in dem der Hals mit dem Installationsteil steckverbindbar oder gewindemäßig verbindbar ist, wobei vornehmlich das Installationsteil ein Lampenträger ist, dessen Lampe von dem Glaskörper umgeben und zu einer Leuchte ergänzt ist.

8. Befestigungsanordnung nach einem der Ansprüche 1 bis 7,
**dadurch gekennzeichnet,** daß der U-förmige Riegel (4) ein Kunststoff-Formteil ist.

9. Befestigungsanordnung nach einem der Ansprüche 1 bis 8,
**dadurch gekennzeichnet,** daß der U-förmige Riegel (4) ein flaches Formteil ist, dessen Basis und Schenkel im Querschnitt rechteckige Form aufweisen, wobei die Breite erheblich größer als die Höhe der Rechteckform ist, vorzugsweise um das Dreifache.

10. Befestigungsanordnung nach einem der Ansprüche 1 bis 9,
**dadurch gekennzeichnet,** daß der Riegel (4) Keilflächen (7) aufweist.

11. Befestigungsanordnung nach einem der Ansprüche 1 bis 10,
**dadurch gekennzeichnet,** daß der als flaches Formteil ausgebildete Riegel (4) an den Innenrandkanten der Schenkel orthogonal abragende Stege aufweist, die vom freien Ende der Schenkel zur Basis hin keilförmig ansteigen und insbesondere in der Basis benachbarten Endbereich (8) in eine parallel zur Schenkelfläche verlaufende Form übergehen.

12. Befestigungsanordnung nach Anspruch 11,
**dadurch gekennzeichnet,** daß die Breite der Stege etwa gleich der Dicke der Schenkel beziehungsweise Basis ist.
